# EUROPÄISCHE PATENTSCHRIFT

(11) **EP 2 888 504 B1**
(45) Veröffentlichungstag und Bekanntmachung des Hinweises auf die Patenterteilung: **05.10.2016**
(21) Anmeldenummer: 13765279.8
(22) Anmeldetag: 07.08.2013
(51) Int. Cl.: F16F 9/348, F16F 9/516

(54) **DÄMPFVORRICHTUNG FÜR BEWEGBARE MÖBELTEILE**
DAMPING DEVICE FOR DISPLACEABLE FURNITURE PARTS
DISPOSITIF D'AMORTISSEMENT POUR DES PIÈCES DE MEUBLE MOBILES

(30) Priorität: 27.08.2012 AT 9252012
(43) Veröffentlichungstag der Anmeldung: 01.07.2015
(73) Patentinhaber: Julius Blum GmbH, 6973 Höchst (AT)
(72) Erfinder: ERLACHER, Markus, A-6972 Fussach (AT)
(74) Vertreter: Torggler & Hofinger Patentanwälte
(86) Internationale Anmeldenummer: PCT/AT2013/000129
(87) Internationale Veröffentlichungsnummer: WO 2014/032064

(56) Entgegenhaltungen:
- EP-B1- 1 241 374
- US-A- 5 988 330

## Beschreibung

Die vorliegende Erfindung bezieht sich auf eine Dämpfvorrichtung für bewegbare Möbelteile, umfassend:
- zumindest eine Fluidkammer,
- zumindest einen in der Fluidkammer verfahrbaren Kolben, wobei der Kolben wenigstens eine Durchlassöffnung für ein in der Fluidkammer vorgesehenes Dämpfungsfluid aufweist,
- zumindest eine bewegliche Abdeckscheibe, welche an einem Lager relativ zur Durchlassöffnung des Kolbens verschwenkbar oder verbiegbar angeordnet ist, wobei die Abdeckscheibe bei einem Dämpfungshub des Kolbens die zumindest eine Durchlassöffnung des Kolbens zumindest teilweise abdeckt oder verschließt, wobei das Lager an einem Randbereich der Abdeckscheibe angeordnet ist.

Im Weiteren betrifft die Erfindung eine Anordnung mit einer Einzugsvorrichtung zum Einziehen eines bewegbaren Möbelteiles in die geschlossene Endlage relativ zu einem Möbelkorpus und mit einer Dämpfvorrichtung der zu beschreibenden Art.

In der EP 1 241 374 B1 ist eine gattungsgemäße Dämpfungsvorrichtung beschrieben, wobei in einem Zylinder ein Kolben verschiebbar gelagert ist und wobei mehrere im Abstand voneinander befindliche Ringscheiben mit Durchlassöffnungen zum Durchtritt eines Dämpfungsfluides versehen sind. Die Ringscheiben sind dabei so angeordnet, dass beim Dämpfungshub des Kolbens die gebogene Ringscheibe jeweils die Durchlassöffnungen der dahinter liegenden Ringscheibe zumindest teilweise abdeckt. Auf diese Weise kann die Dämpfwirkung der Dämpfvorrichtung an die jeweilige Geschwindigkeit eines bewegbaren Möbelteiles angepasst werden. Das Lager für die Ringscheiben wird von einer Kolbenstange gebildet, welche an einem inneren Randbereich der Ringscheiben angeordnet ist. Bei der Rückstellbewegung des Kolbens in die Bereitschaftsstellung können sich nur die Außenbereiche der Ringscheiben verformen, wobei der Widerstand zum Rückstellen relativ hoch ist und folglich die Rückstellbewegung langsam erfolgt. Zudem muss die Kraft der Rückstellfeder relativ groß dimensioniert werden, um den Kolben gegen den Fluidwiderstand wieder in die Ausgangsstellung zu bewegen.

Weitere Dämpfvorrichtungen mit den Merkmalen des Oberbegriffs des Patentanspruchs 1 sind in der DE 951 693 C sowie in der CN 101672339 A beschrieben.

Aufgabe der vorliegenden Erfindung ist es, die Dämpfvorrichtung der eingangs erwähnten Gattung derart weiterzubilden, dass die Rückstellung des Kolbens schneller und mit weniger Kraftaufwand erfolgen kann.

Dies wird erfindungsgemäß durch die Merkmale des Patentanspruchs 1 gelöst. Weitere vorteilhafte Ausgestaltungen der Erfindung sind in den Unteransprüchen angegeben.

Gemäß der Erfindung ist also vorgesehen, dass der Kolben und die Fluidkammer im Querschnitt um eine Längsachse symmetrisch ausgebildet sind und dass die zumindest eine Abdeckscheibe vom Lager in Bezug zu dieser Längsachse asymmetrisch gehalten ist.

Mit anderen Worten wird die zumindest eine Abdeckscheibe vom Lager nicht zentral in der Fluidkammer gehalten, sondern exzentrisch. Beim Stand der Technik gemäß der EP 1 241 374 B1, bei dem das Lager durch die Mitte der Ringscheiben verläuft, können lediglich die Außenbereiche der Ringscheiben verbogen werden. Bei der erfindungsgemäßen Konstruktion hingegen kann praktisch die gesamte Abdeckscheibe als Schwenkteil bzw. Kippteil genutzt werden, wobei ein größerer Verformweg bzw. Schwenkweg zur Verfügung steht. Die Abdeckscheibe kann sich also gegenüber der Durchlassöffnung des Kolbens besser und stärker verformen, sodass bei der Rückstellung des Kolbens der Widerstand gegenüber dem Dämpfungsfluid geringer ist und die zur Rückstellung des Kolbens erforderlichen Kräfte verringert werden können.

Vorzugsweise ist vorgesehen, dass das Lager im äußersten Drittel des Radius der Abdeckscheibe angeordnet ist, wobei das Lager mit geringem Abstand vom Umfangsrand der Abdeckscheibe angeordnet ist.

Die Fluidkammer kann im Querschnitt im Wesentlichen kreisförmig, polygonal oder oval ausgebildet sein.

Die zumindest eine Abdeckscheibe kann flexibel bzw. elastisch verbiegbar ausgebildet sein. Es ist aber auch möglich, die Abdeckscheibe starr auszubilden, wobei die starre Abdeckscheibe über ein Gelenk relativ zum Lager schwenkbar gelagert ist. In diesem Zusammenhang kann vorgesehen sein, die zumindest eine Abdeckscheibe zusammen mit dem Lager einstückig (beispielsweise als Kunststoffspritzteil) auszubilden, wobei die Abdeckscheibe über ein Filmscharnier oder ein Biegegelenk mit dem Lager verbunden ist.

Gemäß einem Ausführungsbeispiel der Erfindung können am Lager auch zwei oder mehrere Abdeckscheiben gelagert sein. Zumindest eine Abdeckscheibe kann wenigstens eine Öffnung zum Durchtritt des Dämpfungsfluides aufweisen.

Weitere Einzelheiten und Vorteile der vorliegenden Erfindung werden anhand des in den Figuren gezeigten Ausführungsbeispiels erläutert. Dabei zeigt bzw. zeigen:
- Fig. 1: eine perspektivische Darstellung eines Möbels mit Schubladen, welche über Schubladenausziehführungen relativ zu einem Möbelkorpus verfahrbar gelagert sind,
- Fig. 2a, 2b: eine perspektivische Darstellung sowie eine Detaildarstellung einer Einzugsvorrichtung zum Einziehen der Schublade in eine geschlossene Endlage, wobei diese Einzugsbewegung durch eine Dämpfvorrichtung dämpfbar ist,
- Fig. 3: die Dämpfvorrichtung in einer Explosionsdarstellung,
- Fig. 4a, 4b: die in einer Ruhelage befindliche Dämpfvorrichtung in einer perspektivischen Schnittdarstellung sowie eine vergrößerte Detaildarstellung hierzu,
- Fig. 5a, 5b: die Dämpfvorrichtung beim Rückstellhub sowie eine vergrößerte Detaildarstellung hierzu,
- Fig. 6a, 6b: die in der Ruhelage befindliche Dämpfvorrichtung in einer weiteren Schnittdarstellung sowie eine vergrößerte Detaildarstellung hierzu,
- Fig. 7a, 7b: die Dämpfvorrichtung bei einer Rückstellbewegung des Kolbens sowie eine vergrößerte Detaildarstellung hierzu.

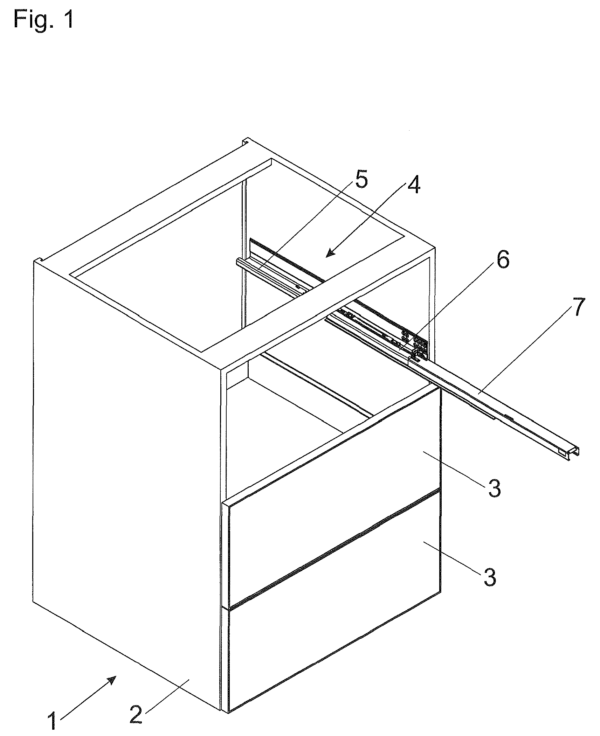

Fig. 1 zeigt ein Möbel 1 mit einem Möbelkorpus 2 in einer perspektivischen Darstellung, wobei Schubladen 3 über Schubladenausziehführungen 4 relativ zum Möbelkorpus 2 verfahrbar gelagert sind. Die Schubladenausziehführungen 4 weisen eine am Möbelkorpus 2 zu befestigende Korpusschiene 5 und eine mit der Schublade 3 zu verbindende Ladenschiene 7 auf, wobei zwischen der Korpusschiene 5 und der Ladenschiene 7 eine auszugsverlängernde Mittelschiene 6 verfahrbar angeordnet ist.

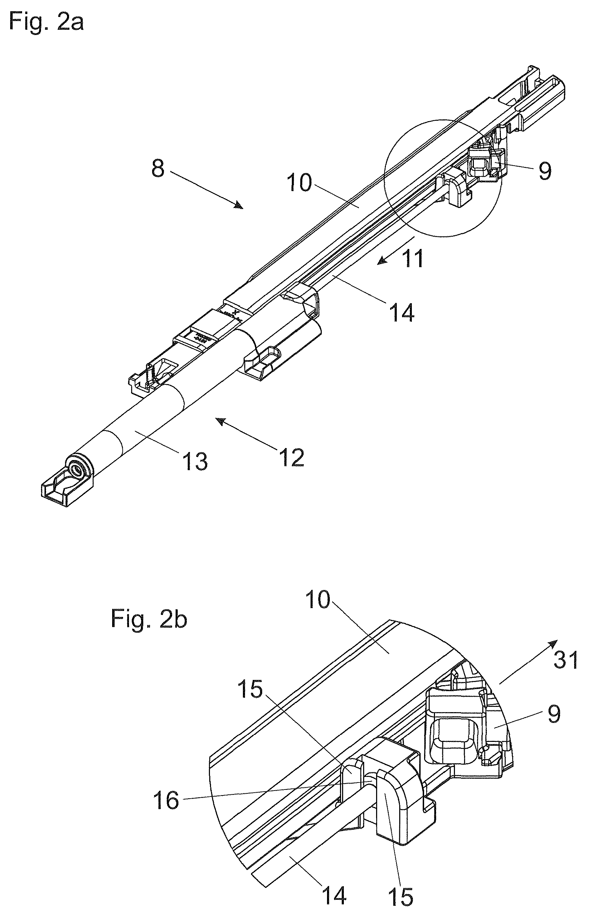

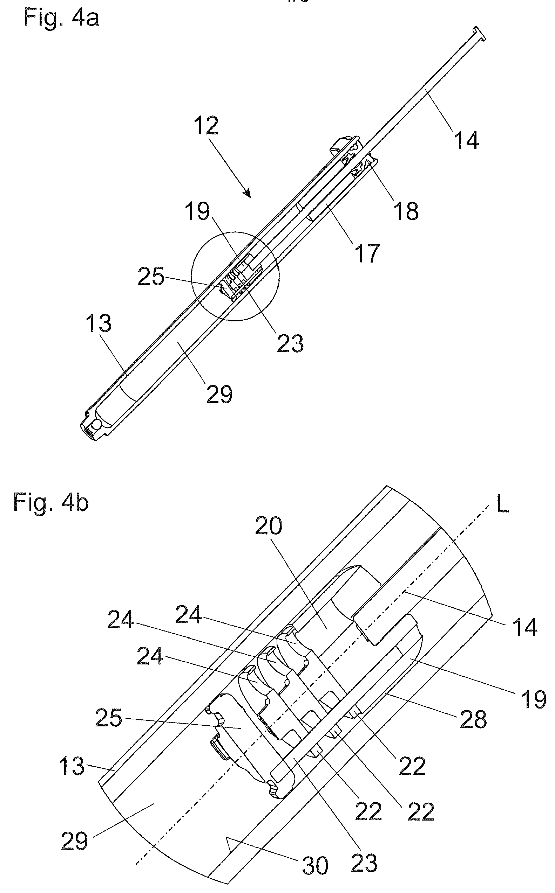

Fig. 2a zeigt eine perspektivische Darstellung einer Einzugsvorrichtung 8 in einer möglichen Ausführungsform, welche zum Einziehen der Schublade 3 bzw. zum Einziehen der Ladenschiene 7 in die geschlossene Endlage vorgesehen ist. Die Einzugsvorrichtung 8 weist ein Gehäuse 10 auf, in dem zumindest eine (hier nicht gezeigte) Feder zur Kraftbeschlagung eines Mitnehmers 9 angeordnet ist. Der federbeaufschlagte Mitnehmer 9 ist zumindest abschnittsweise entlang eines linearen Verfahrweges bewegbar gelagert, wobei der Mitnehmer 9 zwischen einer (wie in Fig. 2a dargestellten) Parkposition, in der die Feder gespannt ist, und einer Endlage, in der die Feder zumindest teilweise entspannt ist, entlang des linearen Verfahrweges in Schließrichtung 11 in eine geschlossene Endlage ziehbar ist, wobei der Mitnehmer 9 mit der Schublade 3 oder mit einer Schiene 5, 6, 7 der Schubladenausziehführung 4 (vorzugsweise über einen Mitnehmerzapfen) lösbar koppelbar ist. Diese federunterstützte Einzugsbewegung des Mitnehmers 9 (und damit jene der Schublade 3) in Schließrichtung 11 ist durch eine Dämpfvorrichtung 12 dämpfbar. Die Dämpfvorrichtung 12 ist als Lineardämpfer ausgebildet und umfasst ein Dämpfergehäuse 13, in dem eine Fluidkammer 29 (Fig. 4a) mit einem darin verschiebbaren Kolben 19 angeordnet ist. Mit dem Kolben 19 ist eine Kolbenstange 14 verbunden, welche aus dem Dämpfergehäuse 13 herausgeführt und mit dem Mitnehmer 9 gekoppelt oder mit diesem koppelbar ist. Bei der Einzugsbewegung des Mitnehmers 9 in Schließrichtung 11 wird die Kolbenstange 14 in das Dämpfergehäuse 13 eingedrückt, wobei diese Schließbewegung durch den Strömungswiderstand des im Dämpfergehäuse 13 befindlichen Dämpfungsfluides abgebremst wird.

Fig. 2b zeigt eine vergrößerte Darstellung des in Fig. 2a eingekreisten Bereiches. Der Mitnehmer 9 weist im gezeigten Ausführungsbeispiel zwei nach oben ragende Vorsprünge 15 auf, welche die Kolbenstange 14 zangenartig umgreifen. Die Kolbenstange 14 weist an ihrem freien Ende einen verbreiterten Gelenkkopf 16 auf, der an den beiden Vorsprüngen 15 anliegt. Wenn also der Mitnehmer 9 - entgegen der Schließrichtung 11 - in Öffnungsrichtung 31 bewegt wird, so wird auch die Kolbenstange 14 aus dem Dämpfergehäuse 13 mit herausgezogen und damit auch der Kolben 19 in eine Bereitschaftsstellung für den nächsten Dämpfungshub zurückbewegt.

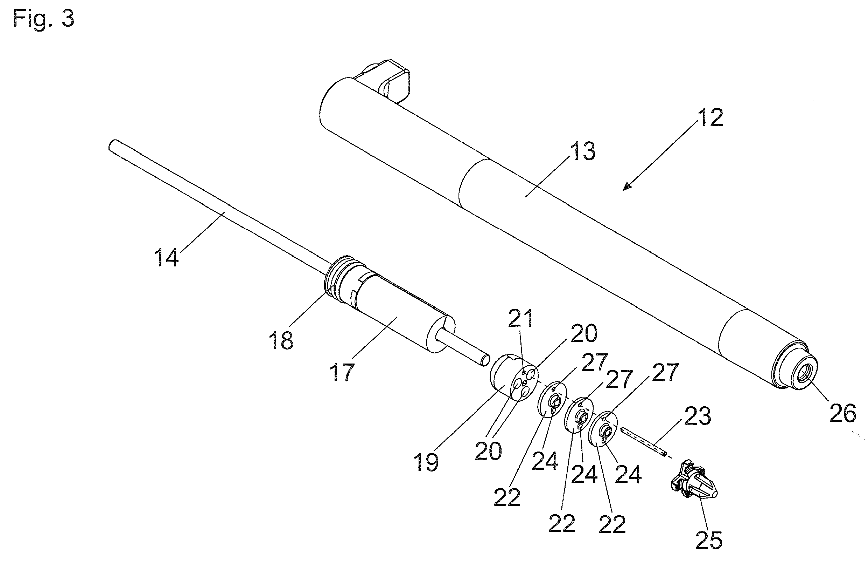

Fig. 3 zeigt die Dämpfvorrichtung 12 in einer Explosionsdarstellung. Im Dämpfergehäuse 13 ist eine Fluidkammer 29 zur verschiebbaren Lagerung eines Kolbens 19 ausgebildet. Der Kolben 19 weist zumindest eine oder mehrere Durchlassöffnung(en) 20 zum Durchtritt des Dämpfungsfluides auf. Zur Abdichtung der Fluidkammer 29 ist eine Dichtung 18 vorgesehen, welche von der Kolbenstange 14 durchsetzt wird. An der Kolbenstange 14 ist zudem ein verformbarer Ausgleichskörper 17 zur Kompensation einer Volumenänderung aufgrund der in die Fluidkammer 29 eintauchenden Kolbenstange 14 angeordnet. Auf der Hochdruckseite des Kolbens 19 (also zwischen dem Kolben 19 und dem Boden 26 der Fluidkammer 29) ist zumindest eine (oder mehrere) Abdeckscheibe(n) 22 an einem Lager 23 angeordnet. Das Lager 23 ist in Montagelage in einer Bohrung 21 des Kolbens 19 eingesetzt, wobei die Bohrung 21 exzentrisch zu einer gedachten Längsmittelachse des Kolbens 19 verläuft. Die Abdeckscheiben 22 weisen Öffnungen 27 auf, welche vom Lager 23 durchsetzt werden. Mit dem Lager 23 ist ein Gleitstück 25 verbunden, welches gegebenenfalls zur Anlage einer Rückstellfeder zur Rückstellung des Kolbens 19 ausgebildet ist. Angemerkt sei jedoch, dass die Anordnung einer Rückstellfeder entfallen kann, weil die Rückstellung des Kolbens 19 auch durch manuelle Zugausübung auf den federbeaufschlagten Mitnehmer 9 (Fig. 2a) herbeigeführt werden kann. Im gezeigten Ausführungsbeispiel weisen die Abdeckscheiben 22 zumindest eine Öffnung 24 zum Durchtritt des Dämpfungsfluides auf. Das verschiebbar gelagerte Gleitstück 25 ermöglicht ein verkantungsfreies Verschieben der Abdeckscheiben 22 innerhalb der Fluidkammer 29.

Fig. 4a zeigt die Dämpfvorrichtung 12 im Querschnitt. Die Kolbenstange 14, welche den verformbaren Ausgleichskörper 17 und die Dichtung 18 durchsetzt, ist mit dem Kolben 19 verbunden. Das Lager 23 weist eine Längsachse auf, die parallel beabstandet zur Längsrichtung der Kolbenstange 14 verläuft.

Fig. 4b zeigt den in Fig. 4a eingekreisten Bereich in einer vergrößerten Darstellung. Der Kolben 19 weist zumindest eine Durchlassöffnung 20 für das Dämpfungsfluid auf. Im gezeigten Ausführungsbeispiel sind auf der Hochdruckseite des Kolbens 19 drei in Längsrichtung der Kolbenstange 14 beabstandete Abdeckscheiben 22 am Lager 23 angeordnet, wobei sich beim Dämpfungshub die zwei vorderen Abdeckscheiben 22 durch den Strömungswiderstand derart verbiegen, dass die Öffnungen 24 der Abdeckscheiben 22 bzw. die Durchlassöffnung 20 des Kolbens 19 zumindest teilweise abgedeckt werden. Auf diese Weise kann der wirksame Strömungsquerschnitt adaptiv reduziert und die Dämpfwirkung an die jeweilige Geschwindigkeit eines bewegbaren Möbelteiles 3 angepasst werden. Zwischen dem Kolben 19 und/oder zwischen den Abdeckscheiben 22 und der Innenwand 30 der Fluidkammer 29 verbleibt ein Spalt 28, durch den das Dämpfungsfluid von der Hochdruckseite des Kolbens 19 zur Niederdruckseite des Kolbens 19 (und in die umgekehrte Richtung) strömen kann. Der Kolben 19 und die Fluidkammer (29) sind im Querschnitt um eine Längsachse (L) symmetrisch ausgebildet, wobei die zumindest eine Abdeckscheibe 22 vom Lager (23) in Bezug zu dieser Längsachse (L) asymmetrisch gehalten ist.

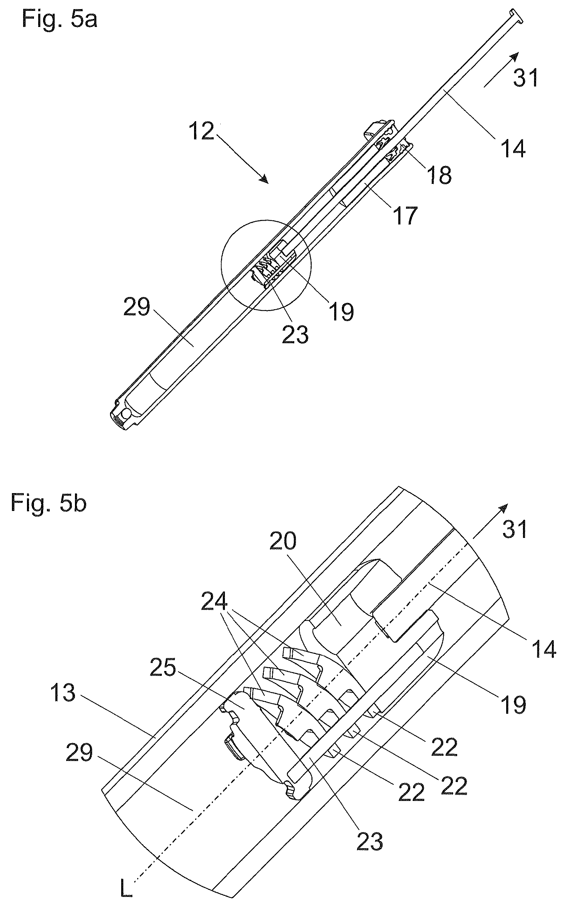

Fig. 5a zeigt die Dämpfvorrichtung 12 bei der Rückstellung des Kolbens 19, d.h. wenn die Kolbenstange 14 in Öffnungsrichtung 31 bewegt wird. Fig. 5b zeigt den in Fig. 5a eingekreisten Bereich in einer vergrößerten Darstellung, wobei der in der Fluidkammer 29 angeordnete Kolben 19 mit den Abdeckscheiben 22 ersichtlich ist. Das Lager 23 ist an den äußeren Randbereichen der Abdeckscheiben 22 angeordnet, wodurch sich die Abdeckscheiben 22 beim Rückstellhub (d.h. bei einer Bewegung in Öffnungsrichtung 31) relativ zur Durchlassöffnung 20 des Kolbens 19 verstärkt verbiegen oder verschwenken können, wobei der wirksame Strömungsquerschnitt für das Dämpfungsfluid rasch vergrößert wird. Auf diese Weise kann das Dämpfungsfluid ohne großen Widerstand von einer Kolbenseite zur anderen zurückströmen, wodurch die erforderliche Kraft zur Rückstellung des Kolbens 19 deutlich reduziert werden kann.

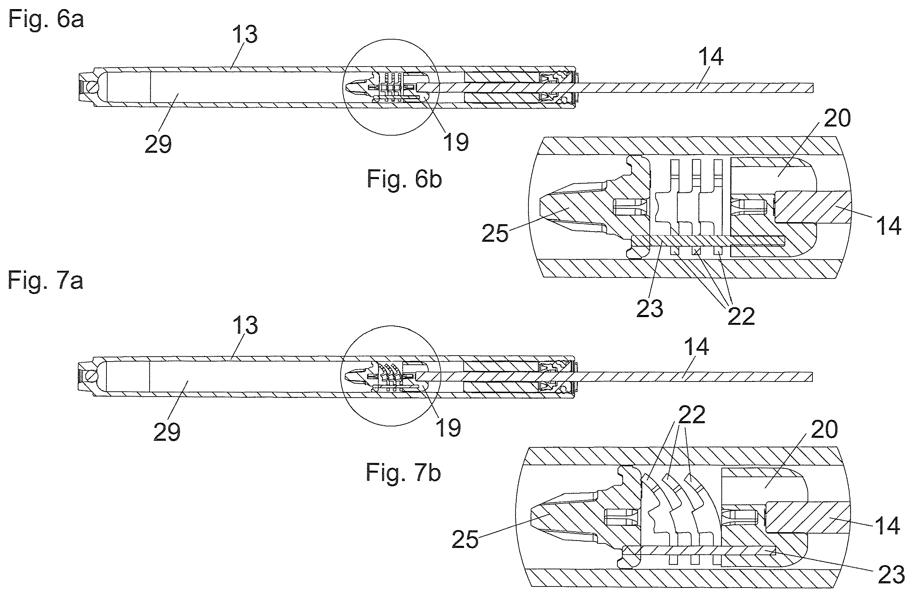

Fig. 6a zeigt die im unbelasteten Zustand befindliche Dämpfvorrichtung 12 in einem weiteren Querschnitt, Fig. 6b zeigt eine vergrößerte Darstellung des in Fig. 6a eingekreisten Bereiches. Im Dämpfergehäuse 13 ist eine Fluidkammer 29 zur verschiebbaren Lagerung des Kolbens 19 ausgebildet, wobei die Randbereiche der Abdeckscheiben 22 in Längsrichtung der Kolbenstange 14 - vorzugsweise äquidistant - voneinander beabstandet sind. Das Lager 23 zur Aufnahme der Abdeckscheiben 22 ist seitlich versetzt zur gedachten Längsmittelachse des Kolbens 19 angeordnet.

Fig. 7a zeigt die Dämpfvorrichtung 12 bei einer Rückstellbewegung des Kolbens 19. Durch die Verlegung des Lagers 23 zu den äußeren Randbereichen der Abdeckscheiben 22 können sich diese - gegenüber einer zentrischen Lagerung - verstärkt verformen, wobei die Durchlassöffnung 20 des Kolbens 19 zur Reduzierung des Strömungswiderstandes rasch freigegeben und der Strömungsquerschnitt vergrößerbar ist. Das Lager 23 ist im gezeigten Ausführungsbeispiel als längliche Stange ausgeführt, wobei ein Ende der Stange mit dem Kolben 19 und das andere Ende der Stange mit dem Gleitstück 25 verbunden ist. Die Umfangsform des Gleitstückes 25 ist so ausgebildet, dass dieses keinen wesentlichen Widerstand für das Dämpfungsfluid darstellt. Die als Lager 23 ausgebildete Stange, welche vom Kolben 19 abragt, erlaubt eine stabile Anbringung der zumindest einen, vorzugsweise von zwei oder mehreren, Abdeckscheibe(n) 22 am Kolben 19, ohne dass dabei die Gefahr besteht, dass sich die Abdeckscheibe(n) 22 infolge des hohen Fluiddrucks in der Fluidkammer 29 vom Kolben 19 ablöst bzw. ablösen. Die als Lager 23 ausgebildete Stange kann auch aus mehreren, miteinander verbundenen Segmenten gebildet sein, wobei vorzugsweise vorgesehen ist, dass jedes Segment eine Abdeckscheibe 22 aufweist.

Die Abdeckscheiben 22 können relativ zueinander unterschiedliche Steifigkeiten, Dicken und/oder auch unterschiedliche Durchmesser aufweisen. Die zumindest eine Abdeckscheibe 22 kann am Lager 23 axial unverschieblich oder auch gegenüber dem Lager 23 in Längsrichtung der Kolbenstange 14 begrenzt beweglich gelagert sein.

## Patentansprüche

1. Dämpfvorrichtung (12) für bewegbare Möbelteile (3), umfassend:
- zumindest eine Fluidkammer (29),
- zumindest einen in der Fluidkammer (29) verfahrbaren Kolben (19), wobei der Kolben (19) wenigstens eine Durchlassöffnung (20) für ein in der Fluidkammer (29) vorgesehenes Dämpfungsfluid aufweist,
- zumindest eine bewegliche Abdeckscheibe (22), welche an einem Lager (23) relativ zur Durchlassöffnung (20) des Kolbens (19) verschwenkbar oder verbiegbar angeordnet ist, wobei die Abdeckscheibe (22) bei einem Dämpfungshub des Kolbens (19) die zumindest eine Durchlassöffnung (20) des Kolbens (19) zumindest teilweise abdeckt oder verschließt, wobei dass das Lager (23) an einem Randbereich der Abdeckscheibe (22) angeordnet ist,
**dadurch gekennzeichnet, dass** der Kolben (19) und die Fluidkammer (29) im Querschnitt um eine Längsachse (L) symmetrisch ausgebildet sind und dass die zumindest eine Abdeckscheibe (22) vom Lager (23) in Bezug zu dieser Längsachse (L) asymmetrisch gehalten ist.

2. Dämpfvorrichtung nach Anspruch 1, **dadurch gekennzeichnet, dass** die zumindest eine Abdeckscheibe (22) flexibel ausgebildet ist.

3. Dämpfvorrichtung nach Anspruch 1, **dadurch gekennzeichnet, dass** die zumindest eine Abdeckscheibe (22) starr ausgebildet ist.

4. Dämpfvorrichtung nach einem der Ansprüche 1 bis 3, **dadurch gekennzeichnet, dass** zwischen dem Kolben (19) und/oder der Abdeckscheibe (22) und einer Innenwand (30) der Fluidkammer (29) ein Spalt (28) verbleibt, durch den das Dämpfungsfluid strömen kann.

5. Dämpfvorrichtung nach einem der Ansprüche 1 bis 4, **dadurch gekennzeichnet, dass** die zumindest eine Abdeckscheibe (22) wenigstens eine Öffnung (24) zum Durchtritt des Dämpfungsfluides aufweist.

6. Dämpfvorrichtung nach einem der Ansprüche 1 bis 5, **dadurch gekennzeichnet, dass** am Lager (23) zwei oder mehrere Abdeckscheiben (22) gelagert sind.

7. Dämpfvorrichtung nach Anspruch 6, **dadurch gekennzeichnet, dass** die Abdeckscheiben (22) in Längsrichtung der Fluidkammer (29), vorzugsweise äquidistant, voneinander beabstandet sind.

8. Dämpfvorrichtung nach einem der Ansprüche 1 bis 7, **dadurch gekennzeichnet, dass** mit dem Kolben (19) eine Kolbenstange (14) verbunden ist, welche aus einem Dämpfergehäuse (13) der Dämpfvorrichtung (12) herausgeführt ist.

9. Dämpfvorrichtung nach Anspruch 8, **dadurch gekennzeichnet, dass** das Lager (23) eine Längsachse aufweist, welche im Wesentlichen parallel beabstandet zur Längsachse (L) der Kolbenstange (14) verläuft.

10. Dämpfvorrichtung nach einem der Ansprüche 1 bis 9, **dadurch gekennzeichnet, dass** das Lager (23) als eine mit dem Kolben (19) verbundene Stange ausgebildet ist.

11. Dämpfvorrichtung nach Anspruch 10, **dadurch gekennzeichnet, dass** ein erstes Ende der Stange mit dem Kolben (19) und ein zweites Ende der Stange mit einem Gleitstück (25) verbunden ist, welches in der Fluidkammer (29) verschiebbar geführt ist.

12. Dämpfvorrichtung nach einem der Ansprüche 1 bis 11, **dadurch gekennzeichnet, dass** die zumindest eine Abdeckscheibe (22) zusammen mit dem Lager (23) einstückig, vorzugsweise als Kunststoffspritzteil, ausgebildet ist.

13. Anordnung mit einer Einzugsvorrichtung (8) zum Einziehen eines bewegbaren Möbelteiles (3) in die geschlossene Endlage relativ zu einem Möbelkorpus (2) und mit einer Dämpfvorrichtung (12) nach einem der Ansprüche 1 bis 12 zum Dämpfen der Schließbewegung.

14. Anordnung nach Anspruch 13, **dadurch gekennzeichnet, dass** die Einzugsvorrichtung (8) einen federbeaufschlagten Mitnehmer (9) zum Einziehen des bewegbaren Möbelteiles (3) aufweist, wobei der Mitnehmer (9) mit dem bewegbaren Möbelteil (3) oder mit einer Schiene (5, 6, 7) einer Schubladenausziehführung (4) lösbar koppelbar ist.

15. Anordnung nach Anspruch 14, **dadurch gekennzeichnet, dass** der federbeaufschlagte Mitnehmer (9) mit der Kolbenstange (14) oder mit dem Dämpfergehäuse (13) der Dämpfvorrichtung (12) verbunden ist.

## Claims

1. A damping device (12) for moveable furniture parts (3), including:
- at least one fluid chamber (29),
- at least one piston (19) displaceable in the fluid chamber (29), wherein the piston (19) has at least one passage opening (20) for a damping fluid provided in the fluid chamber (29),
- at least one moveable cover plate (22) which is arranged on a bearing (23) so as to be pivotable or bendable relative to the passage opening (20) of the piston (19), wherein in a damping stroke of the piston (19), the cover plate (22) at least partially covers or closes the at least one passage opening (20) of the piston (19), wherein the bearing (23) is arranged at an edge region of the cover plate (22),
**characterized in that** the piston (19) and the fluid chamber (29) are symmetrical in cross-section about a longitudinal axis (L), and the at least one cover plate (22) is held by the bearing (23) asymmetrically in relation to said longitudinal axis (L).

2. The damping device according to claim 1, **characterized in that** the at least one cover plate (22) is of a flexible configuration.

3. The damping device according to claim 1, **characterized in that** the at least one cover plate (22) is of a rigid configuration.

4. The damping device according to one of the claims 1 to 3, **characterized in that** remaining between the piston (19) and/or the cover plate (22) and an inside wall (30) of the fluid chamber (29) is a gap (28) through which the damping fluid can flow.

5. The damping device according to one of the claims 1 to 4, **characterized in that** the at least one cover plate (22) has at least one opening (24) for the damping fluid to pass therethrough.

6. The damping device according to one of the claims 1 to 5, **characterized in that** two or more cover plates (22) are mounted on the bearing (23).

7. The damping device according to claim 6, **characterized in that** the cover plates (22) are, preferably equidistantly, spaced from each other in the longitudinal direction of the fluid chamber (29).

8. The damping device according to one of the claims 1 to 7, **characterized in that** connected to the piston (19) is a piston rod (14) which is led out of a damper housing (13) of the damping device (12).

9. The damping device according to claim 8, **characterized in that** the bearing (23) has a longitudinal axis extending in substantially parallel spaced relationship to the longitudinal axis (L) of the piston rod (14).

10. The damping device according to one of the claims 1 to 9, **characterized in that** the bearing (23) is in the form of a rod connected to the piston (19).

11. The damping device according to claim 10, **characterized in that** a first end of the rod is connected to the piston (19) and a second end of the rod is connected to a sliding portion (25) guided displaceably in the fluid chamber (29).

12. The damping device according to one of the claims 1 to 11, **characterized in that** the at least one cover plate (22) is formed in one piece together with the bearing (23), preferably in the form of a plastic injection molding portion.

13. An arrangement including a retraction device (8) for retracting a moveable furniture part (3) into the closed end position relative to a furniture carcass (2) and a damping device (12) according to one of the claims 1 to 12 for damping the closing movement.

14. The arrangement according to claim 13, **characterized in that** the retraction device (8) has a spring-loaded entrainment member (9) for retracting the moveable furniture part (3), wherein the entrainment member (9) can be releasably coupled to the moveable furniture part (3) or to a rail (5, 6, 7) of a drawer extension guide (4).

15. The arrangement according to claim 14, **characterized in that** the spring-loaded entrainment member (9) is connected to the piston rod (14) or to the damper housing (13) of the damping device (12).

## Revendications

1. Dispositif d'amortissement (12) pour des pièces de meuble mobiles (3), comprenant :
- au moins une chambre de fluide (29),
- au moins un piston (19) déplaçable dans la chambre de fluide (29), dans lequel le piston (19) présente au moins une ouverture de passage (20) pour un fluide d'amortissement prévu dans la chambre de fluide (29),
- au moins un disque de protection mobile (22), lequel est disposé de manière pivotante ou déformable sur un palier (23) par rapport à l'ouverture de passage (20) du piston (19), dans lequel le disque de protection (22) lors d'une course d'amortissement du piston (19) recouvre ou ferme au moins partiellement la au moins une ouverture de passage (20) du piston (19), dans lequel le palier (23) est disposé sur une zone marginale du disque de protection (22),
**caractérisé en ce que** le piston (19) et la chambre de fluide (29) sont conçus symétriquement en section transversale autour d'un axe longitudinal (L) et **en ce que** le au moins un disque de protection (22) est maintenu par le palier (23) de façon asymétrique par rapport à cet axe longitudinal (L).

2. Dispositif d'amortissement selon la revendication 1, **caractérisé en ce que** le au moins un disque de protection (22) est conçu de façon souple.

3. Dispositif d'amortissement selon la revendication 1, **caractérisé en ce que** le au moins un disque de protection (22) est conçu de façon rigide.

4. Dispositif d'amortissement selon l'une des revendications 1 à 3, **caractérisé en ce qu'**entre le piston (19) et / ou le disque de protection (22) et une paroi interne (30) de la chambre de fluide (29) demeure une fente (28), par laquelle le fluide d'amortissement peut s'écouler.

5. Dispositif d'amortissement selon l'une des revendications 1 à 4, **caractérisé en ce que** le au moins un disque de protection (22) présente une ouverture (24) pour le passage du fluide d'amortissement.

6. Dispositif d'amortissement selon l'une des revendications 1 à 5, **caractérisé en ce que** sur le palier (23) sont logés deux ou plusieurs disques de protection (22).

7. Dispositif d'amortissement selon la revendication 6, **caractérisé en ce que** les disques de protection (22) sont disposés à distance les uns des autres, de préférence de façon équidistante, dans le sens longitudinal de la chambre de fluide (29).

8. Dispositif d'amortissement selon l'une des revendications 1 à 7, **caractérisé en ce qu'**une tige de piston (14), qui est guidée à l'extérieur d'un boîtier amortisseur (13) du dispositif d'amortissement, est reliée au piston (19).

9. Dispositif d'amortissement selon la revendication 8, **caractérisé en ce que** le palier (23) présente un axe longitudinal, qui passe à distance essentiellement parallèlement par rapport à l'axe longitudinal (L) de la tige de piston (14).

10. Dispositif d'amortissement selon l'une des revendications 1 à 9, **caractérisé en ce que** le palier (23) est conçu comme une tige reliée au piston (19).

11. Dispositif d'amortissement selon la revendication 10, **caractérisé en ce qu'**une première extrémité de la tige est reliée au piston (19) et une deuxième extrémité de la tige est reliée à une pièce coulissante (25), laquelle est guidée de façon déplaçable dans la chambre de fluide (29).

12. Dispositif d'amortissement selon l'une des revendications 1 à 11, **caractérisé en ce que** le au moins un disque de protection (22) est conçu d'une seule pièce conjointement avec le palier (23), de préférence comme une pièce moulée par injection.

13. Agencement avec un dispositif d'introduction (8) pour introduire une partie de meuble mobile (3) dans la position finale fermée par rapport à un corps de meuble (2) et avec un dispositif d'amortissement (12) selon l'une des revendications 1 à 12 pour amortir le mouvement de fermeture.

14. Agencement selon la revendication 13, **caractérisé en ce que** le dispositif d'introduction (8) présente un entraîneur sollicité par ressort (9) pour rétracter la partie de meuble mobile (3), dans lequel l'entraîneur (9) peut être couplé de façon amovible avec la partie de meuble mobile (3) ou avec un rail (5, 6, 7) d'un guidage télescopique de tiroir (4).

15. Agencement selon la revendication 14, **caractérisé en ce que** l'entraîneur (9) sollicité par ressort est relié à la tige de piston (14) ou au boîtier amortisseur (13) du dispositif d'amortissement (12).
